# EUROPEAN PATENT APPLICATION

(11) **EP 3 689 151 A1**
(43) Date of publication of application: **05.08.2020**
(21) Application number: 20154402.0
(22) Date of filing: 29.01.2020
(51) Int. Cl.: A23G 9/04, A23G 9/28, B67D 1/06

(54) **MACHINE FOR DISPENSING BEVERAGES**

(30) Priority: 30.01.2019 IT 201900001359
(71) Applicant: FA.LU. S.r.l., 80131 Napoli (NA) (IT)
(72) Inventor: CAIANO, Luca, 80078 Pozzuoli NA (IT)
(74) Representative: Manna, Sara

(57) **Abstract**

The present invention relates to a machine (10) for the production of a liquid or semi-liquid food product in a first environment and the supply of said food product in a second environment, wherein the second environment is in a remote position with respect to the first environment.

The machine (10) comprises:
- a production group (1) of the food product, to be placed in the first environment;
- a dispensing group (33) of the food product, to be placed in the second environment, comprising its own support means (35) configured to allow the stable positioning thereof on a supporting surface, in such a way as the dispensing group (33) can assume in use a configuration in which is separated from the production group (1),
- first fluid connection means (61), apt to convey the food product from the production group (1) to the dispensing group (33);
- one or more auxiliary tanks (2a, 2b), each configured to receive a respective auxiliary food product and to be placed in a third environment in a remote position with respect to the first environment, and
- second fluid connection means (62), configured to convey the auxiliary food product from each respective auxiliary tank (2a, 2b) to the dispensing device (3).

## Description

### Field of application

The present invention relates to the field of catering equipment and machinery, with particular reference to bars and to professional restaurant kitchens.

Specifically, the invention lies among the devices for the production and supply of liquid or semi-liquid food products, in particular it relates to a machine for the production and supply of beverage, which comprises a main body wherein the drink to be dispensed is produced or collected and means for conveying the drink to a dispenser remote with respect to the aforementioned main body.

### Background

The catering equipment associated with the production of food in liquid or semi-liquid form is very widespread nowadays. In fact, it is extremely common to find commercial or local businesses that practice catering where machines are available for the production and supply of food products such as cremolatas, granitas, sorbets or ice creams.

The machines at issue generally house a tank wherein the food product is collected and treated. The tank typically has a nozzle provided with a handle for the product supply.

Usually, these machines are placed on the counters of bars and restaurants, in order to easily supply products to customers.

Disadvantageously, the encumbrance caused by the presence of such machines on the counter can be a hindrance for the work of the structure staff.

Furthermore, the occupation of even only a part of the counter leads to a reduction in the space intended for the consumption of drinks by customers, and therefore a decrease in the number of people who can be simultaneously served at the counter.

Eventually, a further problem is the negative aesthetic impact caused by the presence of machinery for the supply of liquid or semi-liquid food on the counter. In fact, the machines considered often have important dimensions, and conformations not well adapting to the furnishing style of the structure itself.

### Summary of the invention

The aim of the present invention is therefore to overcome the problems set forth above, and this is achieved through a machine as defined in claim 1.

According to a first aspect, it is an aim of the present invention to provide a machine configured for the production of a liquid or semi-liquid food product at a first environment, and for the product supply at a second environment, wherein the second environment is remote with respect to the former. In the context of this discussion, reference is made to the 'first' and 'second environment' exclusively to emphasize that in use the production group and the dispensing group can be placed and operate in a separated way. Therefore, it is not to be understood that the 'first' and the 'second environment' exclusively refer to separate places, for example the first environment may be the surface of a bar table, while the second environment may indifferently be the compartment below the table itself, as well as a different bar room, for example a basement room.

For this purpose, the machine comprises a production group of the food product, to be placed in the first environment, and a dispensing group to be placed in the second environment. The dispensing group is configured in such a way as to be able to assume in use a configuration in which it is separated from the production group and in which it allows the supply of the product, withdrawn from the first environment through fluid connection means, in the second environment.

The production group is connected to the dispensing group through fluid connection means, the latter being configured to convey the food product from the production group to the dispensing device.

Advantageously, by way of example, in use, the dispensing group can be positioned on the counter of a restaurant, while the production group can be positioned under the counter, hidden from the sight of the customers.

According to a second aspect of the invention, the machine is further configured in such a way as to selectively allow the simultaneous supply of the food product and of one or more accessory food products, contained in accessory tanks. The accessory tanks are connected to the dispensing device through their own fluid connection means. The accessory food products can be apt to modify taste, aroma and/or consistency of the food product.

Advantageously, such feature allows, through a single machine, provided with a single dispensing group, to obtain and supply the customer with a product food that can have different tastes, aromas or consistencies.

Thereby, the user can for example produce a neutral taste food product through the production group, adding one or more food substances to customize its taste, aroma or consistency at the time of the supply.

Further characteristics of the present invention are defined in the corresponding dependent claims.

Other advantages, together with the characteristics and the methods of use of the present invention, will become apparent from the following detailed description of its preferred embodiments, presented by way of non-limiting example.

### Brief description of the figures

Reference will be made to the drawings shown in the attached figures, wherein:
- Figure 1 shows a perspective front view of a preferred embodiment of a group for the production of a liquid or semi-liquid food substance according to the present invention;
- Figure 2 shows a perspective side view of a preferred embodiment of a dispensing group for the supply of a liquid or semi-liquid food substance according to the present invention;
- Figure 3 shows a schematic representation of a preferred embodiment of a machine according to the present invention.

### Detailed description of preferred embodiments of the invention

The present invention will be described below with reference to the above Figures.

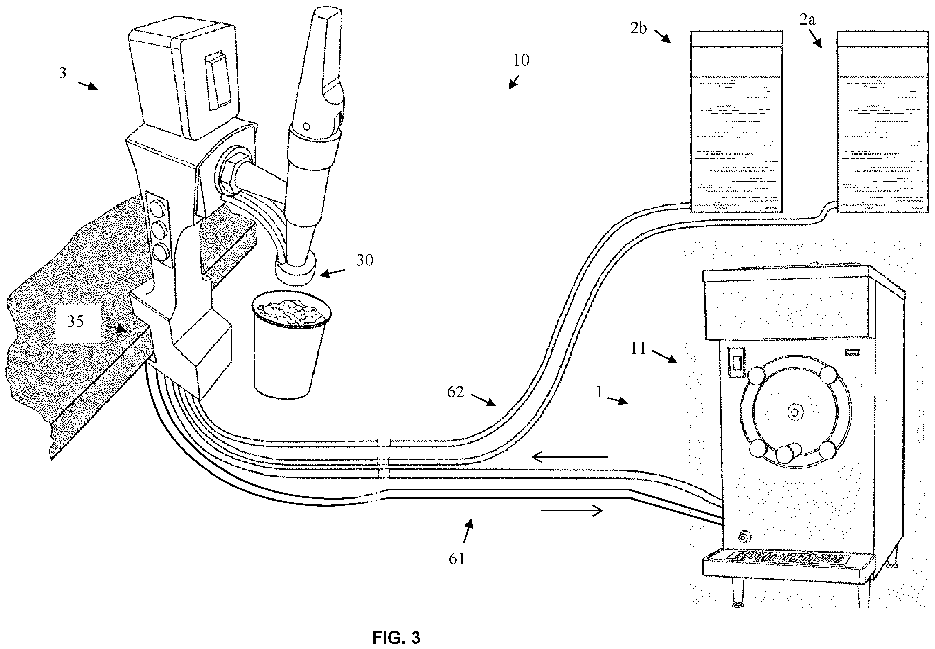

Initially referring to Figure 3, the invention relates to a machine 10 configured for the production of a liquid or semi-liquid food product in a first environment and the supply of such food product in a second environment, wherein the second environment it is in a remote position with respect to the first environment. The reference to the first and second environment is intended to indicate that the machine of the invention is configured in such a way that the production and the supply of the food product occur remotely, as will be explained more clearly below.

In the context of the present description, liquid or semi-liquid food products are products such as cremolatas (hot or cold), sorbets, granitas, ice-creams and the like. In any case, all those food products with a liquid and semi-liquid (or semisolid) consistency.

The machine 10 firstly comprises a production group 1 of the food product, to be placed in the first environment, for example placed on a supporting surface. For this purpose, production group 1 presents its own support means, for example of feet or legs.

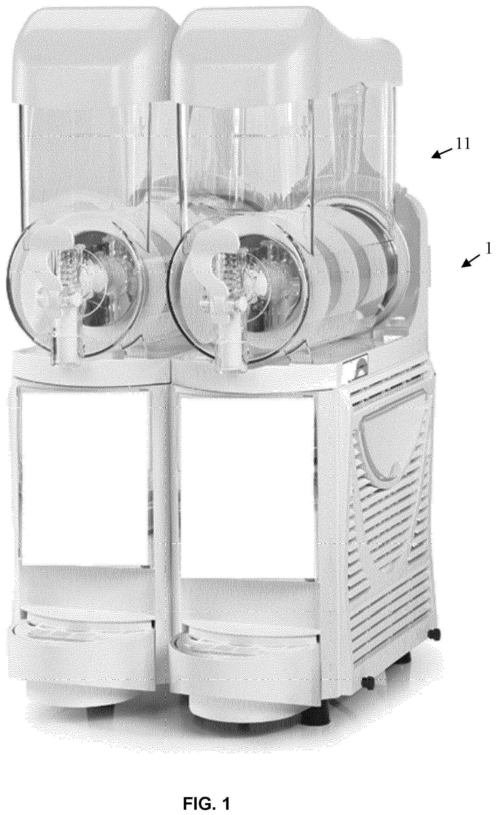

Referring to Figure 1, a production group 1 of a food product, liquid or semi-liquid, is shown, according to a preferred embodiment of the invention.

By way of example, the first environment may be a space placed behind the counter of a bar, away from the surface of the counter where the customers are served.

The production group 1 comprises a tank or tub 11, configured to receive the food product to be dispensed. The tank 11 can comprise inside therein means for automatic mixing of the food product. The product can be poured into the tank 11 as a product prepared and ready for consumption, according to an alternative embodiment of the invention. The tank 11 can be filled manually or using an auto-fill system. Furthermore, the tank 11 can be removable or from production group 1.

In particular, the food product can consist of a basic composition of a more complex food product, to which additional ingredients or auxiliary food products are therefore to be added in order to be given a specific quality of aroma, consistency, taste or organoleptic properties.

In the event that the product to be dispensed is a cold product, such as slush, sorbets, cremolatas or the like, the production group 1 provides the presence of a cooler, equipped with suitable thermostats and apt to cool and maintaining such type of products at a predetermined temperature.

In particular, the production group 1 does not comprise or incorporate supply means for the food product. In other words, production group 1 does not comprise means for the supply of the product on-site, that is, in the same environment wherein the group itself is located, which in this discussion is precisely defined as "first environment". In other words, the production group 1 and the dispensing group 33 are independent and separate from each other in such a way that each one may be placed in a different environment, without there being any constraints of mutual positioning.

To allow the supply of the food product, the machine 10 comprises a dispensing group 33 configured in such a way as to be able to assume in use a configuration wherein it is separated from said production group 1. In such configuration, the dispensing group 33 can dispense the food product produced by the production group 1.

For this purpose, the machine 10 comprises first fluid connection means 61, apt to hydraulically connect the production group 1 to the dispensing group 33 to convey the food product from the tank 11 to the dispensing device 3. In particular, the fluid connection means 61 is configured in such a way as to create a forward line, wherein the product flows from the production group 1 to the dispensing group 33, and a return line, which returns the product not dispensed from the dispensing group 33 to the production group 1.

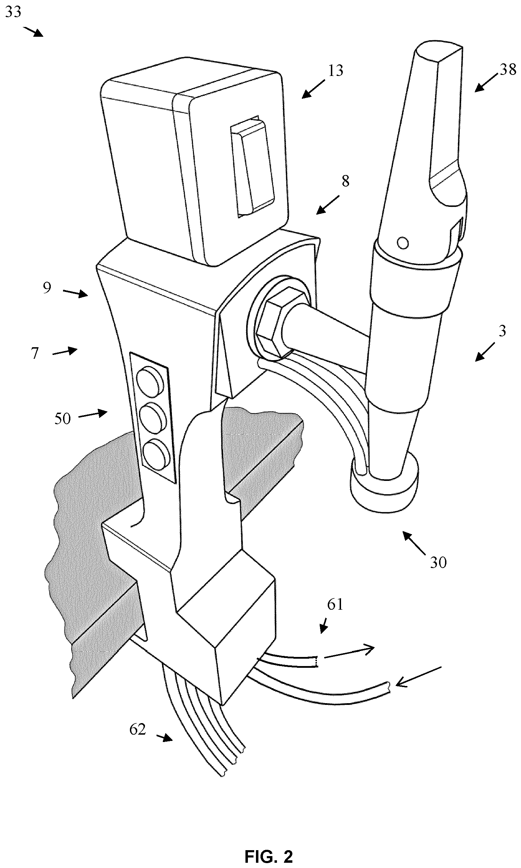

As shown in more detail in Figure 2, the dispensing device 3 is provided with an opening 30, configured to allow the supply of the food product. For this purpose, the dispensing device 3 is in fluid connection with the tank 11.

The dispensing group 33 is configured to be placed in a second environment, in a remote position with respect to the first environment. The dispensing group 33 comprises its own support means 35 configured to allow the stable positioning of the dispensing group 33 on a supporting surface, or to allow a mechanical connection, preferably adjustable, with a supporting surface, for example by means of a clamp or a jaw.

Thereby, advantageously, the production group 1 can operate as a remote unit in rooms where there is no option to be placed on the counter where the customers are being served.

According to further preferred embodiments of the invention, according to what is shown by way of example in Figure 3, the machine 10 can comprise one or more auxiliary tanks, in particular in Figure 3 two auxiliary tanks 2a, 2b are shown. Each auxiliary tank 2a, 2b is configured to receive a respective auxiliary food product. Such auxiliary product can be an edible substance, for food use, apt to confer a particular taste, aroma or consistency to the food product obtained through the production group 1.

These auxiliary tanks 2a, 2b can be placed in a third environment, which is in a remote position with respect to the first environment and/or the second environment. Furthermore, each of the auxiliary tanks can be placed in a respective environment, which is in turn a remote environment, i.e. separate or positioned at a certain distance, with respect to the environments wherein the additional auxiliary tanks are located. In other words, when a plurality of auxiliary tanks is present, these can be, in use, independent and separate not only from the production group 1 and from the dispensing group 33, but also from each other.

For this purpose, the auxiliary tanks may comprise its own supporting means configured to allow stable positioning thereof on a supporting surface, or to allow a mechanical connection of the same, preferably adjustable, with a supporting surface, for example by means of a clamp or a jaw.

The tank 11 and/or the auxiliary tanks 2a, 2b of the machine 10 can be insulated, for example with air, gas, foam or other means of a known type, to decrease the waiting times for the production of the product. Furthermore, tank 11 and/or auxiliary tanks 2a, 2b can be incorporated or comprises within an insulation chamber, which can be opened or fixed.

Each auxiliary tank 2a, 2b can be connected to the dispensing group 33 through second fluid connection means 62, configured to convey the auxiliary food product from each respective auxiliary tank 2a, 2b to the dispensing device 3.

The first and second fluid connection means 61, 62 can be pipes or conduits configured to allow the transport of food products in the liquid or semi-liquid state, preferably of adjustable length in order to allow adaptation to different values of the distance between the respective tanks and the dispensing group 33.

Furthermore, the first and/or second fluid connection means 61, 62 preferably comprise quick coupling/release means respectively with the tank or the production group with which they are associated and with the dispensing group 33.

Even more preferably, the first and/or second fluid connection means 61, 62 are at least partially insulated. In other words, at least a portion of the fluid connection means 61, 62 is coated with a thermally insulating layer or film.

Furthermore, the machine 10 can comprise interface means 50 configured in such a way as to allow a user to select and activate the supply of the food product and/or of one or more auxiliary food products.

In particular, the selection made by the user is translated through the interface means 50 into an activation of switching means 8, also comprised in the dispensing device 33. The switching means 8 is configured to put the second fluid connection means 62 into fluid communication with the opening 30, according to the selection made by the user through the interface means 50.

In addition, the interface means 50 can comprise an actuation device 38, which can be preferably wielded or manipulated by the user, configured to be able to operate the dispensing device 33, according to the selection made by the user.

By way of example, Figure 2 shows interface means 50 comprising buttons associated with a respective auxiliary tank. By operating the respective button, the hydraulic communication between the auxiliary tank associated therewith and the dispensing device 33 is opened. To activate the supply of the food product from the tank 11 simultaneously with the supply of the selected auxiliary food product, it is sufficient to operate a lever 38 for supplying or tapping the product. According to preferred variants of the invention, through the interface means 50 it is possible to select a plurality of auxiliary food products to be delivered simultaneously to the food product from tank 11.

In order to allow the movement of the (auxiliary) food product from the respective (auxiliary) tank to the dispensing device 33, the first and second fluid connection means 61, 62 are each associated with a respective pumping device, not shown in the attached Figures. The pumping device is configured to create a forced circulation of the food product (or of the auxiliary food product) towards the dispensing device 3. For example, the pumping device can comprise a hydraulic pump. The hydraulic pump can be thermally controlled. Furthermore, a regulation can be made according to the product flow passing inside the pipeline itself by means of sensors, flow switches or other type of switches.

Furthermore, the machine 10 can comprise a button 13 for switching the dispensing device 33 on/off, in particular the pumping devices.

Furthermore, the machine 10 preferably comprises a control unit 7 for the regulation of the supply parameters of the product/s by means of the dispensing device 3, such as the duration of the supply and/or the quantity of the food product and/or auxiliary food product supplied. According to preferred embodiments, the machine 10 additionally comprises wireless connection means 9 for the remote control of the control unit 7. Alternatively, or in combination with this variant, the machine 10 can comprise wireless connection means 9 for the remote control of interface means 50.

The machine 10 can be further provided with a timer for automatic operation, or can be manually operated. Both systems can automatically manage overnight operation during which appropriate mechanical and/or electronic devices automatically monitor and regulate the operation of the refrigeration system, hydraulic pumps and any self-filling system of the tanks.

As mentioned, the machine 10 can be provided with a communication system based on Wi-Fi, Bluetooth and/or GSM technology for the remote control of the operating parameters of the machine, as well as for the setting and control of the product doses dispensed. An electronic control unit, and a device for remote control of the operation of the machine 10, preferably provided with a touch screen display, can be provided for this purpose.

The machine 10 can be further provided with alarm systems to signal any malfunction and/or ongoing maintenance operations on production groups, dispensing groups and/or individual tanks.

The present invention has been hitherto described with reference to its preferred embodiments. It is to be understood that each technical solution implemented in the preferred embodiments, described herein by way of example, can be advantageously combined differently with one another, in order to generate other embodiments, which belong to the same inventive core and all of which are in any case comprised in the scope of protection of the claims set forth below.

## Claims

1. Machine (10) for the production of a liquid or semi-liquid food product in a first environment and the supply of said food product in a second environment, wherein the second environment is in a remote position with respect to the first environment, said machine (10) comprising:
- a production group (1) of the food product, to be placed in the first environment, said production group (1) comprising a tank (11) configured to receive the food product;
- a dispensing group (33) of the food product, comprising a dispensing device (3) provided with an opening (30) configured to allow the food product to be dispensed, and
further comprising its own support means (35) configured to allow the positioning thereof on a supporting surface or to realize a mechanical connection with a supporting surface,
so that the dispensing group (33) can assume in use a configuration in which is separated from said production group (1),
wherein said dispensing group (33) is to be placed in the second environment; and
- first fluid connection means (61), apt to hydraulically connect said production group (1) to said dispensing group (33) to convey the food product from said tank (11) to said dispensing device (3),
wherein said machine (10) further comprises:
- one or more auxiliary tanks (2a, 2b), each configured to receive a respective auxiliary food product and to be placed in a third environment in a remote position with respect to the first environment, and
- second fluid connection means (62), configured to convey the auxiliary food product from each respective auxiliary tank (2a, 2b) to said dispensing device (3).

2. Machine (10) according to claim 1, said machine (10) further comprising interface means (50) configured in such a way as to: allow a user to select the supply of the food product and/or the auxiliary food product and to control the actuation of said dispensing device (3) according to said selection.

3. Machine (10) according to the previous claim, wherein said dispensing device (3) comprises switching means (8) configured to put in fluid communication said first and second fluid connection means (61, 62) with said opening (30), according to the selection made by the user through said interface means (50).

4. Machine (10) according to one of the preceding claims, wherein said first and/or second fluid connection means (61, 62) comprise insulated ducts.

5. Machine (10) according to one of the preceding claims, wherein said first and/or second fluid connection means (61, 62) are each associated to a respective pumping device configured to realize a forced circulation of the food product and/or of the auxiliary food product towards said dispensing device (3).

6. Machine (10) according to one of the preceding claims, comprising a control unit (7) of the dispensing parameters of the dispensing device (3), such as the duration of the dispensing and/or the quantity of the supplied food product and/or auxiliary food product, and wireless connection means (9) for remote control of said control unit (7).
